# EUROPEAN PATENT SPECIFICATION

(11) **EP 2 297 526 B1**
(45) Date of publication and mention of the grant of the patent: **21.03.2018**
(21) Application number: 09742204.2
(22) Date of filing: 07.05.2009
(51) Int. Cl.: F24F 13/15, F24F 11/04, F16K 17/36

(54) **PRESSURE VALVE**
DRUCKVENTIL
SOUPAPE DE PRESSION

(30) Priority: 09.05.2008 FI 20085438
(43) Date of publication of application: 23.03.2011
(73) Proprietor: Temet OY, 00880 Helsinki (FI)
(72) Inventor: KARKKULAINEN, Timo, FI-10760 Vantaa (FI)
(74) Representative: Kolster Oy Ab
(86) International application number: PCT/FI2009/050369
(87) International publication number: WO 2009/136004

(56) References cited:
- EP-A1- 0 090 415
- WO-A1-80/00369
- DE-A1-102005 053 480
- US-A- 4 576 088
- US-A- 5 020 423
- US-A- 5 020 423
- US-A- 5 251 654
- US-E- R E36 637

## Description

### Background of the invention

The invention relates to a pressure valve and especially to a pressure valve according to the preamble of claim 1.

In petrochemical plants, oil-drilling rigs, process industry plants and other corresponding plants, it is necessary to safeguard against sudden and high pressure loads caused by explosions, sudden fires, or the like. Ventilation systems are safeguarded against such pressure loads by installing in them pressure valves or blast dampers that close automatically when a pressure load of the above-mentioned type is directed to them. Pressure valves of this type may also be installed at a desired location in a ventilation shaft or directly inside or outside a pressure load-resistant wall in connection with a ventilation shaft. Prior-art pressure valves comprise plate-like closing blades arranged on turning axles. Normally, there are two or more axles in a pressure valve and they extend parallel at a distance from each other across a flow channel formed by the pressure valve, through which air or some other flowing medium flows through the pressure valve. One or more closing blades may be installed next to each other on one axle. In a normal operating mode, the closing blades are in an open position that allows air or some other flowing medium to flow through the closing blades and the pressure valve. Thus, in the open position, the closing blades are set in the flow direction of the air flowing through the pressure valve or at an angle relative to the flow direction. A prior-art pressure valve also comprises a prestressing mechanism that prestresses the closing blades to or retains them in an open position by means of a predefined threshold force and triggers the closing blades to turn into a closed position when the pressure load or a force generated by pressure or the flow rate exceeds the predefined threshold force. The closing blades are designed and set to be capable of receiving a pressure load for triggering the prestressing means to close the closing blades. In other words, the closing blades are formed and installed in the open position in such a manner that the pressure load is directed against the surface of the closing blades. The prestressing means then pull the closing blades into the closed position in which flow through the valve is essentially prevented. Thus, in the closed position, the closing blades are essentially transverse to the air flow direction through the pressure valve and close the through-flow cross-sectional area of the pressure valve.

A problem with the prior-art arrangement described above is the flow resistance caused by the closing blades when the pressure valve is in the normal operating mode in which the closing blades are in the open position in the through-flow channel of the pressure valve. In the normal operating position, the flow resistance of the closing blades weakens the flow through the pressure valve, which is why the ventilation shaft may need to be dimensioned bigger or the size of the pressure valve may need to be increased to provide the desired through-flow through the pressure valve.

To decrease the flow resistance, the closing blades are in their open position preferably as parallel with the flow through the pressure valve as possible so that the flow may proceed through the pressure valve as easily as possible. When the closing blades are essentially parallel with the flow through the pressure valve, the surface area of the closing blades against which the pressure load is directed decreases. This, in turn, weakens the sensitivity of the pressure valve to close under a pressure load and makes it difficult to set the threshold force as desired for closing the closing blades by means of the prestressing means. This is why in several applications, the closing blades cannot be set parallel or nearly parallel to the flow through the pressure valve, that is, large blade angles cannot be used, but in the open position, the surfaces of the closing blades must be partly against the flow through the pressure valve, whereby they cause a significant flow resistance even in normal use.

Publication US 5251654 discloses a flow regulator adaptable for use with exhaust from a process chamber.

### Brief description of the invention

It is thus an object of the invention to develop a pressure valve with which the above-mentioned problems may be solved. The object of the invention is achieved with a pressure valve according to the characterising part of claim 1.

Preferred embodiments of the invention are disclosed in the dependent claims.

The invention is based on the idea that the pressure valve is furnished with flow controllers that are positioned inside the pressure valve and behind the closing blades in the normal flow direction in such a manner that the flow controllers are turnable relative to the body of the pressure valve. The flow controllers control the flow through the closing blades downstream through the pressure valve. In a preferred embodiment, the flow controllers are positioned in such a manner that they extend from the closing blades in the open position at their downstream ends or close to them and thus act as rear slip blades and direct the flow from the closing blades through the pressure valve. Making the flow controllers turnable makes it possible to change their position relative to the flow channel, flow direction, and/or closing blades. It is then possible to connect the flow controllers to the closing blades in such a manner that they are turnable together with the closing blades and can thus be arranged in the same relative position to the closing blades regardless of the position of the closing blades relative to the flow channel, when the closing blades are in the open position.

An advantage of the present invention is that with the flow controllers it is possible to prevent the creation of vortexes in the direction of flow on the trailing edges of the closing blades or close thereto and thus also the turning of the flow behind the closing blades and/or below them on their trailing edges or close thereto regardless of the position of the closing blades. This reduces the pressure difference between the front and rear of the pressure valve as well as the flow resistance, whereby the operation of the valve improves when the closing blades are in the open position.

### Brief description of the figures

The invention will now be described in greater detail by means of preferred embodiments and with reference to the attached drawings, in which:
Figure 1 is a cross-sectional view of an embodiment of a pressure valve of the invention, and
Figure 2 is an axonometric view of the pressure valve of Figure 1 obliquely from the rear.

### Detailed description of the invention

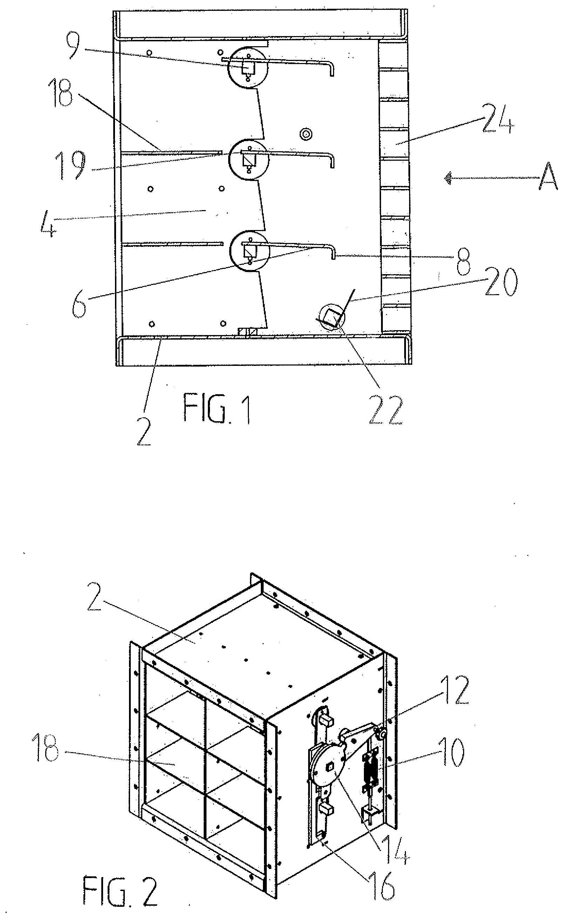

Figure 1 is a sectional view of an embodiment of a pressure valve of the present invention. The pressure valve comprises a body 2 with openings on its opposite sides, whereby a flow channel 4 is formed through the pressure valve in the direction of arrow A, along which air or some other corresponding medium may flow through the pressure valve. In the normal flow direction (arrow A), the pressure valve has at the front or at the front end of the flow channel 4 a protecting screen 24 that controls air flow inside the pressure valve and into the flow channel 4 and solid objects or pieces from entering inside the pressure valve. Inside the pressure valve, closing blades 6 are installed on axles 9 that extend parallel and at a distance from each other across the flow channel 4 as shown in Figure 1. One axle may have one or more closing blades 6 next to each other, and there may be two or more adjacent axles, for instance. The axles 9 are mounted rotatably or with bearings on the body 2 in such a manner that they are capable of turning relative to the body 2. The closing blades 6 are preferably plate-like pieces that are turnable between an open position, in which flow is allowed through the pressure valve, and closed position, in which flow is prevented through the pressure valve. In their open position shown in Figure 1, the closing blades 6 are essentially parallel to the flow channel 4 and/or flow direction A, or alternatively at an angle to the flow channel 4 or flow direction A of the pressure valve, and thus allow flow through the pressure valve. In the open position, closing blades 6 mounted on adjacent axles 9 have a clearance between them through which flow is allowed. In their open position, the closing blades 6 are preferably set as parallel as possible to the flow channel 4 and/or flow direction A so that the flow resistance caused by the closing blades 6 in the pressure valve is as small as possible. In their closed position, the closing blades 6 are turned essentially transverse to the flow channel 4 and/or flow direction A of the pressure valve in such a manner that they essentially close the flow channel and essentially prevent flow through the pressure valve. In their closed position, the closing blades 6 are preferably perpendicular to the longitudinal direction of the flow channel 4 and/or the flow direction A, whereby they effectively close the pressure valve. In the case of Figure 1, the closing blades 6 are turned from the open position to the closed position by turning the axles 9 in such a manner that the closing blades 6 turn downward to a transverse position to the flow direction A and flow channel 4. The closing blades 6 are preferably dimensioned in such a manner that in the closed position, the leading edge 8 of the closing blade 6 settles against the trailing edge 19 of the closing blade 6 on the adjacent axle or in its immediate vicinity to seal the flow channel 4. Correspondingly, in the closed position, the leading and trailing edges 8, 19 of the closing blades 6 adjacent to the body 2 settle against the body 2 or in its immediate vicinity.

According to Figure 2, the axles 9 are further connected to each other with a linkage 16 such that they turn simultaneously together. In the normal operating position, the closing blades 6 are in the open position shown in Figure 1, in which the flowing medium is allowed to flow between the closing blades 6 through the pressure valve in flow direction A. The pressure valve is also furnished with prestressing means 10, 12, 14 that prestress the closing blades 6 into the open position and trigger them to turn to the closed position in response to a pressure increase in the flow channel 4 of the pressure valve. The prestressing means 10, 12, 14 are further operationally connected to the linkage 16 for turning the axles 9 simultaneously and thus also for turning the closing blades 6 simultaneously to the closed position. The prestressing means comprise a spring 10 that, when the closing blades 6 are in the open position and prestressed mode, is ready to trigger the pressure valve into the closed mode by turning the closing blades 6 into the closed position. The spring 10 is restrained in the prestressed mode through a cam wheel 14 connected operationally to the linkage 16 and its counterpart 12. Thus, when pressure exceeds the threshold value set by the prestressing means 10, 12, 14, the cam wheel 14 turns and the spring 10 is released from its prestressed mode, whereby it turns the closing blades 6 into the closed position. The linkage 16, axles 9, closing blades 6, and prestressing means 10, 12, 14 are designed and implemented in such a manner that when the pressure valve is triggered and the closing blades 6 turn into the closed position, the closing blades 6 also lock into this closed position. Thus, the pressure valve is preferably furnished with a manual opening mechanism, by means of which the closing blades 6 may, when necessary, be turned manually back into the open position, whereby the prestressing means 10, 12, 14 also prestress for a re-closing of the pressure valve.

As Figure 1 shows, the closing blades 6 are in the flow channel 4 and thus, even when they are in the open position, cause flow resistance to the flow through the pressure valve and its flow channel 4. When the medium flows past the closing blades 6, vortexes are formed in the flow in flow direction A at the trailing edges 19 of the closing blades 6 or close thereto, and flow tends to turn below the closing blades 6. This turning and vortexing of the flow causes flow resistance that is undesirable during the normal operation of the pressure valve, when air or some other flowing medium is intended to flow through the pressure valve. To prevent the turning and vortexing of the flow, the pressure valve is furnished with one or more flow controllers 18 installed downstream of the closing blades 6 to control the flow between the open closing blades 6 on through the pressure valve. As Figure 1 shows, the flow controllers 18 are plate-like parts that are intended to prevent the turning and vortexing of the flow downstream of the closing blades 6, that is, in flow direction A after the closing blades 6. The flow controllers are thus mounted behind the closing blades 6 in flow direction A, and they preferably extend from the closing blades 6 in the open position from their trailing edges 19 or from their downstream ends 19 or close to the trailing edges / ends 19.

The flow controllers 18 may extend only a short distance from the closing blades 6 or alternatively until the downstream end of the flow channel 4, as shown in Figure 1.

The flow controllers preferably begin from the trailing edge 19 of the closing blades 6 or close thereto in such a manner that they essentially prevent the flow from turning below or behind the closing blade 6 and they prevent the vortexing of the flow.

In Figure 1, the plate-like flow controllers 18 extend essentially parallel to the flow channel 4 and flow direction A of the pressure valve, but in an alternative embodiment, the flow controllers 18 may also extend at an angle to the flow channel 4 or flow direction A. Further, the flow controllers 18 may extend essentially parallel to the closing blades 6 or at an angle to the closing blades 6 when the closing blades 6 are in the open position. In accordance with what is stated above, it should be noted that the closing blades 6 may, in their open position, be parallel to flow direction A or the flow channel 4 or at an angle to flow direction A and the flow channel 4.

In the solution of Figure 1, the flow controllers 18 are fixed to the body 2 of the pressure valve. The flow controllers 18 may then extend in different positions relative to the closing valves 6 depending on the position set to the closing blades 6 when the pressure valve is in the open mode.

When the closing blades 6 are in the open position, they are preferably set essentially parallel or nearly parallel to flow direction A and/or the flow channel 4, as shown in Figure 1, whereby they create an as small a flow resistance as possible during the open mode of the pressure valve. However, this also means that the surface area of the closing valves 6 that meets or receives the pressure or flow through the pressure valve in the direction of the flow channel 4 or in flow direction A becomes smaller. Conventionally, this is the reason why the closing blades 6 could not be set essentially parallel to the flow channel 4 and/or flow direction A in the open position, because the position of the closing blades 6 define the threshold pressure or threshold force that when meeting the closing blades 6 makes the prestressing means 10, 12, 14 trigger the turning of the closing blades 6 into the closed position. Conventionally, the flow resistance could not therefore be minimised by turning the closing blades 6 as close as possible to flow direction A or the direction of the flow channel 4, but in the open position of the closing blades their surfaces had to be partially against the flow through the pressure valve so that they could receive a pressure load to trigger the pressure valve into the closed position.

According to Figure 1, the pressure valve of the invention is furnished with a separate trigger 20, 22 for triggering the pressure valve as a result of a pressure load and for turning the closing blades 6 into the closed position. The use of a separate trigger 20, 22 makes it possible to set the closing blades 6 essentially parallel to the flow direction 8 or flow channel 4, because they need not act as parts receiving the pressure load for triggering the pressure valve into the closed position, but a separate trigger 20, 22 triggers the pressure valve to turn the closing blades 6 into the closed position.

Thus, according to the invention, the pressure valve comprises a separate trigger 20, 22 connected operationally to the prestressing means 10, 12, 14 for triggering the closing blades 6 to turn into the closed position in response to a pressure increase in the flow channel 4 of the pressure valve. In other words, the trigger 20, 22 is connected to the prestressing means 10, 12, 14 in such a manner that when encountering a load exceeding a threshold pressure, threshold force, or a threshold flow, the trigger 20, 22 releases the prestressing means 10, 12, 14 that then turn the closing blades 6 into the closed position.

According to Figure 1, the trigger comprises a receiving member 20 for receiving pressure or force or flow generated by pressure, which is arranged to turn or move under the pressure or force or flow generated by pressure to trigger the closing blades 6 to turn into the closed position, when the pressure or the flow generated by it may exceed a threshold value set by means of the trigger and prestressing means 10, 12, 14. In this embodiment, the receiving member 20 is a plate-like part, against whose surface the pressure or force or flow generated by the pressure is arranged to act. The receiving part may extend on the entire width/height of the flow channel 4 or on only a part of its width/height.

In the embodiment of Figure 1, the receiving member 20 is arranged on a turning axle 22 that is operationally connected to the prestressing means 10, 12, 14 in such a manner that the turning of the axle 22 triggers the turning of the closing blades 6 into the closed position in response to a pressure increase in the flow channel 4 of the pressure valve. Alternatively, the receiving member may move without turning when it encounters a pressure exceeding the threshold value. The trigger 20, 22 is arranged to trigger the turning of the closing blades 6 into the closed position when a predefined threshold pressure or threshold force or threshold flow generated by pressure is exceeded. The position of the receiving member 20 in relation to flow direction A and/or flow channel 4 may be used to affect the threshold value. In other words, the larger part of the surface area of the receiving member 20 receives the pressure, that is, the more crosswise the receiving member 20 is in flow direction A, the lower the threshold value may be.

In accordance with what is stated above, the trigger 20, 22 may be made adjustable in such a manner that the threshold pressure or threshold force or threshold flow generated by pressure is adjustable. The position of the receiving member 20 in relation to the flow channel 4 and/or the flow through the pressure valve, flow direction A, is made adjustable for setting and adjusting the threshold pressure or threshold force or threshold flow generated by pressure. This may be done in such a manner that the position of the receiving member 20 is made adjustable on the axle 22 of the trigger in relation to the flow channel 4 and/or flow through the pressure valve, or the position of the axle 22 in relation to the body 2 is made adjustable for adjusting the position of the receiving member 20 fixed to the axle 22 in relation to the flow channel 4 and/or flow through the pressure valve.

The trigger 20, 22 is preferably positioned inside the pressure valve upstream of the closing blades 6, that is, in front of the closing blades 6. Naturally, the trigger may also alternatively be positioned downstream of the closing blades or after them, or even on the outer surface of the pressure valve. It should further be noted that even though the pressure valve had a trigger, the closing blades 6 may also be designed to be capable of receiving a pressure load for triggering the prestressing means to close the closing blades 6. In other words, the closing blades are designed and installed into the open position in such a manner that the pressure load is directed against the surface of the closing blades or against a fold on their leading edge 8, for instance, whereby they aid in or affect the triggering of the pressure valve and closing blades into the closed position.

It is obvious to a person skilled in the art that as technology advances, the basic idea of the invention may be implemented in many different ways. The invention and its embodiments are thus not restricted to the above examples, but may vary within the scope of the claims.

## Claims

1. A pressure valve that comprises a body (2) forming a flow channel (4) through the pressure valve, closing blades (6) arranged to be turned between a closed position, in which the closing blades (6) are essentially transverse to the flow channel (4) of the pressure valve essentially closing the flow channel and preventing flow through the pressure valve, and an open position, in which the closing blades (6) are at an angle to the flow channel (4) of the pressure valve or essentially parallel to the flow channel (4) allowing flow through the pressure valve, and prestressing means (10, 12, 14) for prestressing the closing blades (6) into the open position and for triggering them to turn into the closed position in response to a pressure increase in the flow channel (4) of the pressure valve, and one or more flow controllers (18) installed downstream of the closing blades (6) to control the flow between the closing blades (6) on through the pressure valve, when they are in the open position, **characterised in that** the flow controllers (18) are positioned inside the pressure valve and behind the closing blades (6) in the normal flow direction and installed turnable with respect to the body of the pressure valve.

2. A pressure valve as claimed in claim 1, **characterised in that** the flow controllers (18) are made to extend from the closing blades (6) in the open position at their downstream ends (19) or close to the ends (19).

3. A pressure valve as claimed in claim 1 or 2, **characterised in that** the flow controllers (18) are plate-like parts.

4. A pressure valve as claimed in any one of the previous claims 1 to 3, **characterised in that** the flow controllers (18) extend essentially in the direction of the flow channel (4).

5. A pressure valve as claimed in any one of the previous claims 1 to 3, **characterised in that** the flow controllers (18) extend essentially in the direction of the closing blades (6) or at an angle relative to the closing blades (6) when the closing blades (6) are in the open position.

6. A pressure valve as claimed in any one of the preceding claims 1 to 5, **characterised in that** the closing blades (6) are installed to extend across the flow channel (4) of the pressure valve and on parallel, spaced apart turnable axles (9) for turning the closing blades (6) between the closed position and the open position.

7. A pressure valve as claimed in claim 6, **characterised in that** the axles (9) are connected to each other and to the prestressing means (10, 12, 14) with a linkage (16) for turning all closing blades (6) simultaneously.

8. A pressure valve as claimed in any one of the preceding claims 1 to 7, **characterised in that** the prestressing means (10, 12, 14) comprise a spring (10) for prestressing the closing blades (6) into the open position and for triggering them to turn into the closed position in response to a pressure increase in the flow channel (4) of the pressure valve.

9. A pressure valve as claimed in any one of the preceding claims 1 to 8, **characterised in that** the pressure valve also comprises a protecting screen (24) installed upstream of the closing blades (6) to control air flow to the flow channel (4) of the pressure valve and to prevent solid pieces from entering the pressure valve.

## Patentansprüche

1. Druckventil, das einen Körper (2), der einen Strömungskanal (4) durch das Druckventil bildet, Schließlamellen (6), die eingerichtet sind, um zwischen einer geschlossenen Position, in welcher die Schließlamellen (6) im Wesentlichen quer zu dem Strömungskanal (4) des Druckventils stehen, wobei sie im Wesentlichen den Strömungskanal verschließen und eine Strömung durch das Druckventil verhindern, und einer geöffneten Position, in welcher die Schließlamellen (6) in einem Winkel zu dem Strömungskanal (4) des Druckventils stehen oder im Wesentlichen parallel zu dem Strömungskanal (4) sind, wobei sie eine Strömung durch das Druckventil ermöglichen, und ein Vorspannmittel (10, 12, 14) zum Vorspannen der Schließlamellen (6) in die geöffnete Position und zum Auslösen derselbigen zum Drehen in die geschlossene Position in Reaktion auf einen Druckanstieg in dem Strömungskanal (4) des Druckventils, und eine oder mehrere Strömungssteuerungen (18), die stromabwärts der Schließlamellen (6) installiert sind, um die Strömung zwischen den Schließlamellen (6) durch das Druckventil zu steuern, wenn sie sich in der geöffneten Position befinden, umfasst, **dadurch gekennzeichnet, dass** die Strömungssteuerungen (18) innerhalb des Druckventils und hinter den Schließlamellen (6) in der normalen Strömungsrichtung positioniert sind und bezüglich des Körpers des Druckventils drehbar installiert sind.

2. Druckventil nach Anspruch 1, **dadurch gekennzeichnet, dass** die Strömungssteuerungen (18) derart hergestellt sind, dass sie sich von den Schließlamellen (6) in der geöffneten Position an ihren stromabwärtigen Enden (19) oder nahe bei den Enden (19) erstrecken.

3. Druckventil nach Anspruch 1 oder 2, **dadurch gekennzeichnet, dass** die Strömungssteuerungen (18) plattenartige Teile sind.

4. Druckventil nach einem der vorstehenden Ansprüche 1 bis 3, **dadurch gekennzeichnet, dass** sich die Strömungssteuerungen (18) im Wesentlichen in der Richtung des Strömungskanals (4) erstrecken.

5. Druckventil nach einem der vorstehenden Ansprüche 1 bis 3, **dadurch gekennzeichnet, dass** sich die Strömungssteuerungen (18) im Wesentlichen in der Richtung der Schließlamellen (6) oder in einem Winkel bezüglich der Schließlamellen (6) erstrecken, wenn sich die Schließlamellen (6) in der geöffneten Position befinden.

6. Druckventil nach einem der vorstehenden Ansprüche 1 bis 5, **dadurch gekennzeichnet, dass** die Schließlamellen (6) installiert sind, um sich über den Strömungskanal (4) des Druckventils und auf parallelen, voneinander beabstandeten drehbaren Achsen (9) zum Drehen der Schließlamellen (6) zwischen der geschlossenen Position und der geöffneten Position zu erstrecken.

7. Druckventil nach Anspruch 6, **dadurch gekennzeichnet, dass** die Achsen (9) miteinander und mit dem Vorspannmittel (10, 12, 14) mit einer Kopplung (16) zum gleichzeitigen Drehen aller Schließlamellen (6) verbunden sind.

8. Druckventil nach einem der vorstehenden Ansprüche 1 bis 7, **dadurch gekennzeichnet, dass** das Vorspannmittel (10, 12, 14) eine Feder (10) zum Vorspannen der Schließlamellen (6) in die geöffnete Position und zum Auslösen derselbigen zum Drehen in die geschlossene Position in Reaktion auf einen Druckanstieg in dem Strömungskanal (4) des Druckventils umfasst.

9. Druckventil nach einem der vorstehenden Ansprüche 1 bis 8, **dadurch gekennzeichnet, dass** das Druckventil auch einen Schutzschirm (24) umfasst, der stromaufwärts der Schließlamellen (6) installiert ist, um die Luftströmung durch den Strömungskanal (4) des Druckventils zu steuern und zu verhindern, dass feste Stücke in das Druckventil eintreten.

## Revendications

1. Vanne de pression comprenant un corps (2) formant un canal d'écoulement (4) à travers la vanne de pression, des pales de fermeture (6) agencées pour être tournées entre une position fermée, dans laquelle les pales de fermeture (6) sont sensiblement transversales au canal d'écoulement (4) de la vanne de pression en fermant sensiblement le canal d'écoulement et en empêchant tout écoulement à travers la vanne de pression, et une position ouverte, dans laquelle les pales de fermeture (6) sont inclinées par rapport au canal d'écoulement (4) de la vanne de pression ou sensiblement parallèles au canal d'écoulement (4) en permettant un écoulement à travers la vanne de pression, et des moyens de précontrainte (10, 12, 14) pour effectuer une précontrainte sur les pales de fermeture (6) à la position ouverte et pour les amener à tourner à la position fermée en réponse à une augmentation de pression dans le canal d'écoulement (4) de la vanne de pression, et un ou plusieurs organes de commande d'écoulement (18) installés en aval des pales de fermeture (6) pour commander l'écoulement entre les pales de fermeture (6) à travers la vanne de pression, lorsqu'elles sont à la position ouverte, **caractérisée en ce que** les organes de commande d'écoulement (18) sont positionnés à l'intérieur de la vanne de pression et derrière les pales de fermeture (6) dans le sens d'écoulement normal et installés de manière à pouvoir pivoter par rapport au corps de la vanne de pression.

2. Vanne de pression selon la revendication 1, **caractérisée en ce que** les organes de commande d'écoulement (18) sont constitués pour s'étendre à partir des pales de fermeture (6) à la position ouverte à leurs extrémités en aval (19) ou à proximité des extrémités (19).

3. Vanne de pression selon la revendication 1 ou 2, **caractérisée en ce que** les organes de commande d'écoulement (18) sont des pièces en forme de plaques.

4. Vanne de pression selon l'une quelconque des revendications 1 à 3, **caractérisée en ce que** les organes de commande de flux (18) s'étendent sensiblement dans le sens du canal d'écoulement (4).

5. Vanne de pression selon l'une quelconque des revendications 1 à 3, **caractérisée en ce que** les organes de commande d'écoulement (18) s'étendent sensiblement dans le sens des pales de fermeture (6) ou à un angle par rapport aux pales de fermeture (6) lorsque les pales de fermeture (6) sont à la position ouverte.

6. Vanne de pression selon l'une quelconque des revendications 1 à 5, **caractérisée en ce que** les pales de fermeture (6) sont installées pour s'étendre à travers le canal d'écoulement (4) de la vanne de pression et sur des axes pivotants espacés parallèles (9) pour faire tourner les pales de fermeture (6) entre la position fermée et la position ouverte.

7. Vanne de pression selon la revendication 6, **caractérisée en ce que** les axes (9) sont raccordés l'un à l'autre et aux moyens de précontrainte (10, 12, 14) avec une timonerie (16) pour faire tourner simultanément toutes les pales de fermeture (6).

8. Vanne de pression selon l'une quelconque des revendications 1 à 7, **caractérisée en ce que** les moyens de précontrainte (10, 12, 14) comprennent un ressort (10) pour effectuer la précontrainte des pales de fermeture (6) à la position ouverte et pour les amener à tourner à la position fermée en réponse à une augmentation de pression dans le canal d'écoulement (4) de la vanne de pression.

9. Vanne de pression selon l'une quelconque des revendications 1 à 8, **caractérisée en ce que** la vanne de pression comprend également un écran de protection (24) installé en amont des pales de fermeture (6) pour commander un écoulement d'air vers le canal d'écoulement (4) de la vanne de pression et pour empêcher que des corps solides ne pénètrent dans la vanne de pression.
